# EUROPÄISCHE PATENTANMELDUNG

(11) **EP 0 989 034 A2**
(43) Veröffentlichungstag der Anmeldung: **29.03.2000**
(21) Anmeldenummer: 99116382.5
(22) Anmeldetag: 20.08.1999
(51) Int. Cl.: B60R 21/22

(54) **Seitenaufprall-Airbageinrichtung**

(30) Priorität: 22.09.1998 DE 19843402
(71) Anmelder: DaimlerChrysler AG, 70567 Stuttgart (DE)
(72) Erfinder: Tschäschke, Ulrich, 71139 Ehningen (DE)

(57) **Zusammenfassung**

Die Erfindung betrifft eine Seitenaufprall-Airbageinrichtung für eine Fahrgastzelle eines Kraftfahrzeugs, mit einem Windowbag, der in aufgeblasenem Aktivzustand einen wenigstens teilweise eine Seitenscheibe abdeckenden Fensterabschnitt umfaßt, der sich von einer B-Säule bis wenigstens zu einer C-Säule erstreckt und/oder sich von der B-Säule bis wenigstens zu einer A-Säule erstreckt, wobei wenigstens einem der Fensterabschnitte des Windowbags ein zusätzlicher Windowbagsäulenabschnitt zugeordnet ist, der im aufgeblasenen Aktivzustand die zugehörige A- bzw. C-Säule zur Fahrgastzelle zumindest teilweise abdeckt und gegen das Auftreffen insbesondere des Kopf- und Schulterbereichs eines Fahrgastes abpolstert, und wobei der Fensterabschnitt des Windowbags in eingefaltetem, nicht aufgeblasenem Einbauzustand unter einem seitlichen, vorne und hinten durch eine Front- bzw. Heckscheibe begrenzten Endabschnitt der dachrahmenseitigen Innenverkleidung (Fahrzeughimmel) verstaut liegt, deren seitlicher Endabschnitt beim Auslösen des Windowbags zum Freigeben des Entfaltungsweges bewegt wird.
Auch der vordere bzw. hintere Windowbagsäulenabschnitt liegt im eingefalteten Einbauzustand unter dem seitlichen Endabschnitt der Innenverkleidung (Fahrzeughimmel) verstaut und kann daraus in Richtung der A- bzw. C-Säule austreten.

## Beschreibung

Die Erfindung betrifft eine Seitenaufprall-Airbageinrichtung nach dem Oberbegriff des Patentanspruchs 1.

Eine solche, aus DE 298 03 985 U1 bekannte Seitenaufprall-Airbageinrichtung umfaßt einen Windowbag mit einem in aufgeblasenem Aktivzustand wenigstens teilweise eine Seitenscheibe abdeckenden Fensterabschnitt, der sich von einer A-Säule bis zu einer C-Säule erstreckt. Weiter umfaßt der Windowbag einen dem Fensterabschnitt zugeordneten Windowbagsäulenabschnitt, der im aufgeblasenen Aktivzustand die zugehörige C-Säule zur Fahrgastzelle hin zumindest teilweise abdeckt. Der Fensterabschnitt sowie der Windowbagsäulenabschnitt liegen in eingefaltetem, nicht aufgeblasenem Einbauzustand unter einem vorne und hinten durch eine Front- bzw. Heckscheibe begrenzten, seitlichen Endabschnitt der dachrahmenseitigen Innenverkleidung verstaut, wobei der Endabschnitt beim Auslösen des Windowbags zum Freigeben des Entfaltungsweges bewegt wird.

Da der Fensterabschnitt sowie der Windowbagsäulenabschnitt in eingefaltetem Einbauzustand unter dem seitlichen, vorne und hinten durch eine Front- bzw. Heckscheibe begrenzten Endabschnitt angeordnet sind, kann mit diesem bekannten Windowbag bzw. mit dessen Windowbagsäulenabschnitt unter Umständen nur ein begrenzter Teil der C-Säule abgedeckt werden. Insbesondere bei sehr schräg geneigten C-Säulen, wie sie beispielsweise bei Coupe-Fahrzeugen üblich sind, endet der Fahrzeughimmel sehr weit vorne gegenüber der C-Säule, so daß deren großflächige Abdeckung durch den Windowbagsäulenabschnitt problematisch sein kann.

Eine weitere Seitenaufprall-Airbageinrichtung ist aus dem DE 296 16 904 U1 bekannt und umfaßt einen Windowbag, der in aufgeblasenem Aktivzustand eine Seitenscheibe wenigstens teilweise abdeckt und sich von der A-Säule bis wenigstens zu der B-Säule des Fahrzeugs erstreckt. In einer weiteren Ausführungsform dieses Windowbags ist ferner vorgesehen, daß sich dieser von der A-Säule bis zu der C-Säule erstreckt. Dem Windowbag ist ein vorderer Abschnitt zugeordnet, der in seinem aufgeblasenen Aktivzustand die A-Säule wenigstens großteils abdeckt und bei einem versetzten Frontalaufprall oder bei einem Aufprall von schräg vorne einen Kopfkontakt mit der A-Säule verhindert. Dabei kann der Windowbag mit dem vorderen Abschnitt sowohl einteilig als auch durch separate Kammern gebildet sein. Im Bereich seines vorderen und hinteren unteren Endes ist der den vorderen Abschnitt umfassende Windowbag über jeweils ein Spannband mit der A-Säule und bzw. mit der C-Säule verbunden, die den Windowbag in aufgeblasenen Aktivzustand in seiner Lage halten. In nicht aufgeblasenem Einbauzustand ist der Windowbag unter der Verkleidung der A- und der C-Säule sowie des seitlichen Dachholms versteckt angeordnet.

Die Anordnung des Windowbags in nicht aufgeblasenem Einbauzustand im Bereich unter der Verkleidung der A- und C-Säule hat den Nachteil, daß in der A- und C-Säulenrohbaustruktur Ausnehmungen vorgesehen werden müssen, die beispielsweise zentral der jeweiligen Säulen in deren Erstreckungsrichtung verlaufen und dadurch die Säulenrohbaustruktur auf nachteilige Weise schwächen. Zudem muß die A- und/oder C-Säulenverkleidung zweiteilig ausgeführt werden, was einen zusätzlichen Herstellungs- und Kostenaufwand bedingt.

Aus DE 296 05 896 U1 ist eine Seitenaufprall-Airbageinrichtungen mit einem Windowbag entnehmbar, der sich in aufgeblasenem Aktivzustand von einem Bereich seitlich des Frontinsassen bis in einen Bereich seitlich eines Heckinsassen erstreckt. Im gefalteten Einbauzustand erstreckt sich der Windowbag unter der Fahrzeuginnenverkleidung längs der A-Säule, längs des Dachrahmens und längs der C-Säule.

Auch diese Schutzeinrichtung hat somit die bereits beschriebenen Nachteile, daß in der A- oder C-Säule die Säulenrohbaustruktur schwächende Ausnehmungen vorgesehen werden müssen, wobei außerdem die A- oder C-Säulenverkleidung zweiteilig ausgeführt werden muß.

Aufgabe der Erfindung ist es, eine Seitenaufprall-Airbageinrichtung für eine Fahrgastzelle eines Kraftfahrzeugs der im Oberbegriff des Patentanspruchs 1 angegebenen Art zu schaffen, die einen sicheren Schutz für die Fahrzeuginsassen bietet, eine Schwächung der A- oder C-Säulenrohbaustruktur vermeidet und gleichzeitig einen einfacheren und kostengünstigeren Einbau in das Fahrzeug ermöglicht.

Diese Aufgabe wird erfindungsgemäß durch eine Seitenaufprall-Airbageinrichtung für eine Fahrgastzelle eines Kraftfahrzeugs mit den Merkmalen des Patentanspruchs 1 gelöst.

Bei der Seitenaufprall-Airbageinrichtung nach der Erfindung tritt der vordere und/oder hintere Windowbagsäulenabschnitt beim Entfalten in Richtung der A- bzw. C-Säule in vertikaler und horizontaler Bewegung schräg nach vorne unten bzw. hinten unten aus. Gegenüber dem bekannten Stand der Technik, bei dem der Windowbagsäulenabschnitt im wesentlichen lediglich vertikal nach unten austritt, wird dadurch eine großflächigere Abdeckung der A-und/oder C-Säule geschaffen. Dies ist insbesondere bei Coupe-Fahrzeugen mit sehr schräg geneigten Säulen besonders wünschenswert. Auch können dadurch sehr breite A oder C-Säulen besonders wirkungsvoll abgedeckt werden. Das Verstauen der Windowbagsäulenabschnitte erfolgt im Bereich des Dachhimmels an einem Dachholm oder dgl., wodurch eine Schwächung der Rohbaustruktur der A- oder C-Säule vermieden werden kann. Zum Freigeben des Entfaltungsweges wird der seitliche Endabschnitt bewegt, wobei die Säulenverkleidungen der A-,B- und C-Säule beim Entfalten und Aufblasen des Windowbags fest an ihrem Platz verbleiben und mit entsprechend geringerem Bauaufwand hergestellt und eingebaut werden können.

Vorteilhafte Ausführungsformen der erfindungsgemäßen Seitenaufprall-Airbageinrichtung mit zweckmäßigen Weiterbildungen der Erfindung sind in den Unteransprüchen beschrieben.

So ist es in weiterer Ausgestaltung der Erfindung vorteilhaft, wenn der Windowbag im Aktivzustand einen Trennabschnitt aufweist, der den vorderen und/oder hinteren Windowbagsäulenabschnitt zumindest teilweise von dem Fensterabschnitt unterteilt. Beim Entfalten führt der Fensterabschnitt eine vertikale Bewegung in Richtung nach unten und der Windowbagsäulenabschnitt in Richtung nach schräg unten aus, wodurch beide Abschnitte auf kürzestem Wege an ihrem Einsatzort gelangen.

Insbesondere ein durch einen vertikal verlaufenden Trennabschnitt von dem Fensterabschnitt abgeteilter Windowbagsäulenabschnitt zeichnet sich durch einen besonders kurzen Entfaltungszeitraum aus.

Auch hat es sich als günstig erwiesen, den gesamten Windowbag mit dem Fensterabschnitt und dem wenigstens einen Windowbagsäulenabschnitt beim Auslösen zwischen dem Fahrzeughimmel und einem an einem seitlichen Dachholm angeordneten Keder austreten zu lassen, wobei der Windowbag als in den Keder integrierte Baueinheit einfach an der Dachrohbaustruktur angeordnet werden kann.

Ein kurzer Entfaltungsweg ergibt sich, wenn der vordere und/oder hintere Windowbagsäulenabschnitt beim Auslösen zwischen dem Fahrzeughimmel im Bereich der A- und/oder C-Säule und der zugeordneten A- bzw. C-Säulenverkleidung austritt und damit der Windowbagsäulenabschnitt unmittelbar oberhalb seines Einsatzortes angeordnet ist.

Wenn in weiterer Ausgestaltung der Erfindung der vordere und/oder hintere Windowbagsäulenabschnitt zumindest teilweise durch einen horizontalen Trennabschnitt von dem Fensterabschnitt unterteilt ist, können die A- oder C-Säule in Fahrzeuglängsrichtung betrachtet besonders weit nach vorne bzw. hinten überdeckt werden.

Wenn sich der horizontale Trennabschnitt im Aktivzustand des vorderen und/oder hinteren Windowbagsäulenabschnitts unmittelbar unterhalb eines Füllkanals des Windowbags befindet, ergibt sich ein besonders gut horizontal bewegbarer Windowbagsäulenabschnitt, der zudem die A- oder C-Säule auf ihrer annähernd gesamten Höhe zu überdecken vermag.

Sind der vordere und/oder hintere Windowbagsäulenabschnitt im Einbauzustand in Richtung gegen den Fensterabschnitt eingefaltet, so kann die Einbaulänge des entfaltbaren Windowbags beträchtlich verkürzt werden. Somit können die Windowbagsäulenabschnitte auch bei Fahrzeugen mit stark geneigten A- und C-Säulen im Bereich des seitlichen Endabschnitts des Dachhimmels angeordnet werden, wobei die Windowbagsäulenabschnitte beim Entfalten vertikal nach unten und horizontal nach vorne bzw. hinten bewegt werden.

Auch hat es sich als günstig erwiesen, den gesamten Windowbag mit dem Fensterabschnitt und dem wenigstens einen Windowbagsäulenabschnitt beim Auslösen zwischen dem Fahrzeughimmel und einem an einem seitlichen Dachholm angeordneten Keder austreten zu lassen, wobei der Windowbag als in den Keder integrierte Baueinheit einfach an der Dachrohbaustruktur angeordnet werden kann.

Am seitlichen Endabschnitt des Fahrzeughimmels ist eine Austrittsklappe vorgesehen, durch die auf einfache Weise der seitliche Endabschnitt nach innen oben verschwenkt und damit der Entfaltungsweg freigegeben werden kann. Liegt die Schwenkachse dabei im Bereich der am Fahrzeughimmel angeordneten Handgriffe, so kann durch diese die Schwenkbewegung der Austrittsklappe begrenzt werden.

Ist ein vorderes und hinteres Ende des Fensterabschnitts mit einer A-, B- oder C-Säulenrohbaustruktur jeweils durch ein Spannband verbunden, so wird der Windowbag in aufgeblasenem Aktivzustand an seinem Einsatzort gehalten. Beim Entfalten des Windowbags treten die Spannbänder zwischen der entsprechenden A-, B- oder C-Säulenverkleidung und der A-, B- oder C-Säulenrohbaustruktur aus, so daß die Säulenverkleidungen an Ort und Stelle verbleiben können. Um die schnelle Entfaltung und Bewegung an den Einsatzort zu gewährleisten, sind der vordere und/oder hintere Windowbagsäulenabschnitt nicht mit den Spannbändern verbunden.

Sind die Spannbänder etwa in Höhe der Fensterbänke angeordnet, so kann die Spannungslinie im Windowbag entsprechend tief gehalten werden, wodurch auch niedrig sitzende Personen vor einem Auftreffen auf die Scheiben oder Säulen sicher geschützt werden.

Um einen besonders einfachen und platzsparenden Aufbau der Seitenaufprall-Airbageinrichtung zu schaffen, sind die Windowbagsäulenabschnitte und der Fensterabschnitt durch einem gemeinsamen Füllkanal mit einem gemeinsamen Gasgenerator verbunden.

Um einen besonders schnelles Aufblasen und Entfalten der Seitenaufprall-Airbageinrichtung zu ermöglichen, sind dem vorderen und/oder hinteren Windowbagsäulenabschnitt und dem Fensterabschnitt jeweils separate Füllkanäle zugeordnet, die mit einem gemeinsamen oder jeweiligen Gasgenerator verbunden sind.

Schließlich hat es sich als besonders bevorzugt erwiesen, die A- und/oder C-Säulenverkleidung einteilig auszubilden und somit den Herstellungs- und Einbauaufwand zu reduzieren.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine Seitenansicht einer Seitenaufprall-Airbageinrichtung nach einer ersten Ausführungsform der Erfindung mit einem an der Rohbaustruktur befestigten Windowbag in aufge blasenem Aktivzustand;
- Fig. 2: eine Seitenansicht der Seitenaufprall-Airbageinrichtung gemäß Fig.1 mit dem Windowbag in Einbauzustand;
- Fig. 3: eine Seitenansicht einer Seitenaufprall-Airbageinrichtung nach einer weiteren Ausführungsform der Erfindung mit einem an der Rohbaustruktur befestigten Windowbag in aufgeblasenem Aktivzustand;
- Fig. 4: eine Seitenansicht der Seitenaufprall-Airbageinrichtung gemäß Fig.3 mit dem Windowbag in Einbauzustand.

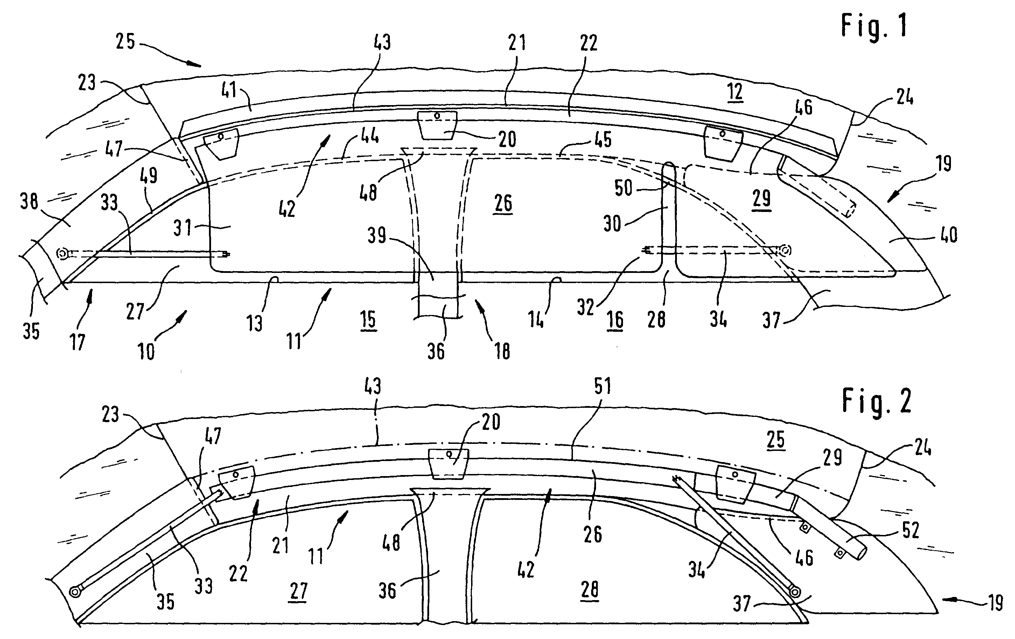

Fig.1 zeigt in Seitenansicht eine Seitenaufprall-Airbageinrichtung 10 für eine Fahrgastzelle mit einem Windowbag 11, der sich in aufgeblasenem Aktivzustand in vertikaler Richtung etwa von einem Fahrzeughimmel 12 bis auf Höhe von Fensterbänken 13,14 der vorderen bzw. hinteren Türe 15,16 und in horizontaler Richtung von der A-Säule 17 über die B-Säule 18 bis zur C-Säule 19 erstreckt. Der Fahrzeughimmel 12 besteht aus einem gegen die Fahrgastzelle mit einem Stoff oder Leder überzogenen Kunststoffteil, das an eine Dachrohbaustruktur 21 des Fahrzeugs angepaßt und an dieser z.B. durch Rastverbindungselemente befestigbar ist. Der Windowbag 11 ist mit Hilfe von Aufnahmen 20 an einem der Dachrohbaustruktur 21 zugeordneten seitlichen Dachholm 22 befestigt, der sich von einem vorderen, durch eine Frontscheibe begrenzten Ende 23 bis zu einem hinteren, durch eine Heckscheibe begrenzten Ende 24 des Daches 25 bzw. des Fahrzeughimmels 12 erstreckt.

Der Windowbag 11 umfaßt einen Fensterabschnitt 26, der die B-Säule 18 sowie die vordere und die hintere Seitenscheibe 27,28 zumindest teilweise abdeckt, so daß ein Fahrzeuginsasse bei einem Seitenaufprall zuverlässig vor dem gefährlichen Auftreffen auf einer der Scheiben 27,28 bzw. der B-Säule 18 oder sein Kopf vor dem Herausbewegen durch eine beschädigte Seitenscheibe 27,28 hindurch aus der Fahrgastzelle bewahrt wird.

Im Bereich der C-Säule 19 umfaßt der Windowbag 11 einen dem Fensterabschnitt 26 zugeordneten hinteren Windowbagsäulenabschnitt 29, der die C-Säule 19 gegen das Auftreffen insbesondere des Kopf- und Schulterbereichs eines Fahrgastes abpolstert. Der Windowbag 11 weist in dem hier gezeigten Ausführungsbeispiel einen im Aktivzustand als Spalt ausgebildeten vertikalen Trennabschnitt 30 auf, der den Fensterabschnitt 26 von dem Windowbagsäulenabschnitt 29 zumindest teilweise unterteilt. Der hintere Windowbagsäulenabschnitt 29 ist dabei wie der Fensterabschnitt 26 als Gassackpolster ausgebildet, er könnte jedoch auch aus einem nicht aufblasbaren Polstermaterial wie z.B. Schaumstoff bestehen.

Der Fensterabschnitt 26 ist an seinem vorderen und hinteren Ende 31,32 über jeweils ein Spannband 33,34 mit der A-Säulenrohbaustruktur 35 bzw. der C-Säulenrohbaustruktur 37 verbunden, so daß der Windowbag 11 im Aktivzustand in seiner Lage gehalten ist. Die Spannbänder 33,34 erstrecken sich dabei etwa waagerecht und vorzugsweise etwa auf Höhe der Fensterbänke 13,14. Der hintere Windowbagsäulenabschnitt 29 ist nicht mit dem hinteren Spannband 34 verbunden und befindet sich in Blickrichtung von der Fahrgastzelle nach außen vor diesem angeordnet.

Beim Entfalten des Windowbags 11 verbleiben die einteilig ausgebildeten A-, B- und C-Säulenverkleidungen 38-40 fest an ihrem Platz und eine Austrittsklappe 41, die einem seitlicher Endabschnitt 42 des Fahrzeughimmels 12 zugeordnet ist und sich in Fahrzeuglängsrichtung etwa zwischen dem vorderen und hinteren Ende 23,24 des Daches 25 erstreckt, verschwenkt um eine Schwenkachse 43 nach innen oben und gibt den Entfaltungsweg für den Windowbag 11 frei. In der hier gezeigten Ausführungsform schwenkt die Austrittsklappe 41 im Türbereich aus einer jeweiligen Überlappung 44,45 mit einer Türdichtung 49,50 der vorderen und hinteren Türe 15,16 und im Bereich der Säulen aus Überlappungen 46-48 mit einer A-, B- und C-Säulenverkleidung 38-40 heraus. Das vordere Spannband 33 tritt zwischen der Türdichtung 49 der vorderen Türe 15 und der A-Säulenverkleidung 38 aus und das hintere Spannband 34 tritt zwischen der Türdichtung 50 der hinteren Türe 16 und der C-Säulenverkleidung 39 aus.

Fig.2 zeigt in Seitenansicht den Windowbag 11 in Einbauzustand, wobei die Innenverkleidung der Fahrgastzelle mit der A-, B- und C-Säulenverkleidung 38-40 sowie dem seitliche Endabschnitt 42 des Fahrzeughimmels 12 mit der verschwenkbaren Austrittsklappe 41 nicht dargestellt sind. Lediglich die Schwenkachse 43 ist in Fig.2 angedeutet. Der Windowbag 11 ist mit Hilfe eines Keders 51 oder dgl. Klemmeinrichtung, der den Windowbag 11 in eingefaltetem Einbauzustand umgibt, an dem Dachholm 22 befestigt. Dabei ist erkennbar, daß der gesamte Windowbag 11 zwischen dem vorderen und hinteren Ende 23,24 des Dachs 25 unter dem seitlichen Endabschnitt 42 des Fahrzeughimmels 12 angeordnet ist. Der den Fensterabschnitt 26 von dem Windowbagsäulenabschnitt 29 zumindest teilweise unterteilende Trennabschnitt 30 liegt in Fahrzeuglängsrichtung betrachtet etwa auf Höhe des vorderen Endes der C-Säule 19, so daß der hintere Windowbagsäulenabschnitt 29 beim Auslösen des Windowbags 11 im wesentlichen zwischen dem Endabschnitt 42 bzw. der Austrittsklappe 41 des Fahrzeughimmels 12 und der C-Säulenverkleidung 40 nach unten austritt. Der hintere Windowbagsäulenabschnitt 29 und der Fensterabschnitt 26 des Windowbags 11 sind mit einem nicht dargestellten Füllkanal verbunden, durch den ein Gas aus einem gemeinsamen Gasgenerator 52 beim Auslösen sowohl in den hinteren Windowbagsäulenabschnitt 29 als auch in den Fensterabschnitt 26 einströmen kann. Dabei können der Fensterabschnitt 26 und der Windowbagsäulenabschnitt 29 in mehrere jeweils mit dem Füllkanal in Verbindung stehende Kammern unterteilt sein.

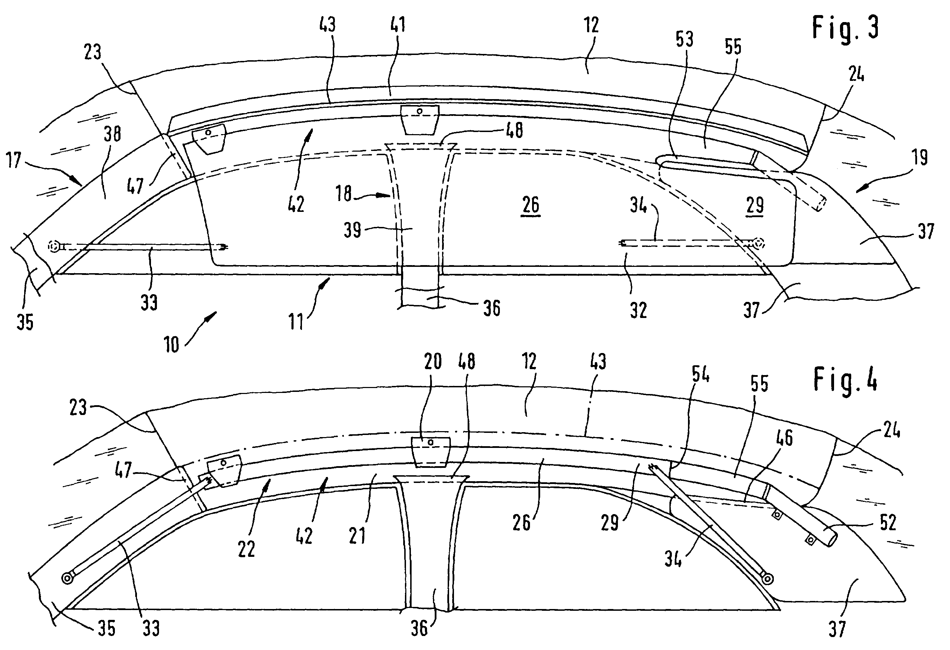

Fig.3 zeigt in Seitenansicht eine weitere Ausführungsform der Seitenaufprall-Airbageinrichtung 10 mit einem Windowbag 11 in aufgeblasenem Aktivzustand, der sich von dem Windowbag 11 nach der ersten Ausführungsform dadurch unterscheidet, daß der als Gassackpolster ausgebildete hintere Windowbagsäulenabschnitt 29 von dem Windowbag 11 durch einen im Aktivzustand horizontalen, spaltförmigen Trennabschnitt 53 zumindest teilweise unterteilt ist. Der horizontale Trennabschnitt 53 befindet sich unmittelbar unterhalb eines Füllkanals 55 und erstreckt sich horizontal und in Fahrzeuglängsrichtung betrachtet ausgehend etwa von auf Höhe des vorderen Endes der C-Säule 19 bis zum Ende des hintere Windowbagsäulenabschnitts 29 bzw. des Windowbags 11. Das hintere spannband 34 ist wiederum einerseits am hinteren Ende 32 des Fensterabschnittes 26 und andererseits an der C-Säulenrohbaustruktur 37 befestigt, wobei der Windowbagsäulenabschnitt 29 nicht an dem hinteren Spannband 34 befestigt und in Blickrichtung von der Fahrgastzelle nach außen vor diesem angeordnet ist.

In Fig.4 ist der Windowbag 11 gemäß Fig.3 im Einbauzustand gezeigt, wobei wiederum die Innenverkleidung der Fahrgastzelle mit der A-, B- und C-Säulenverkleidung 38-40 sowie dem seitliche Endabschnitt 42 des Fahrzeughimmels 12 mit der verschwenkbaren Austrittsklappe 41 nicht dargestellt sind. Lediglich die Schwenkachse 43 ist in Fig.4 angedeutet. Der Windowbag 11 ist auch hier in seiner Einbaulänge durch das vordere und hintere Ende 23,24 des Dachs 25 begrenzt und unter dem hier nicht dargestellten seitlichen Endabschnitt 42 des Fahrzeug himmels 12 angeordnet.

Der Windowbagsäulenabschnitt 29 ist in eingebautem, nicht aufgeblasenem Zustand nach vorne in Richtung des Fensterabschnitts 26 über die gesamte Länge des horizontalen Trennabschnitts 53 eingefaltet, wie durch die Linie 54 am Windowbag 11 angedeutet. Beim Entfalten des Windowbags 11 bewegt sich der Fensterabschnitt 26 im wesentlichen in vertikaler Richtung nach unten. Der hintere Windowbagsäulenabschnitt 29 entfaltet sich in einer vertikalen Bewegung nach unten und in einer horizontalen Bewegung nach hinten, um den Fahrgast vor einem Auftreffen auf die C-Säule 19 zu schützen.

Im Rahmen der Erfindung ist es als mitumfaßt zu betrachten, daß zur Überdeckung der A-Säule 17 auch ein vorderer Windowbagsäulenabschnitt vorgesehen werden kann, wobei dann auch dieser Windowbagsäulenabschnitt in eingefaltetem Zustand unter dem seitlichen Endabschnitt 42 der Fahrzeughimmels 12 angeordnet wäre und beim Entfalten entweder nur in vertikaler Richtung nach unten oder in vertikaler und horizontaler Richtung nach unten und vorne bewegbar wäre.

Gleichfalls ist es von der Erfindung mitumfaßt, zum Entfalten des Fensterabschnitts und des oder der Windowbagsäulenabschnitte jeweils einen separaten Gasgenerator vorzusehen.

## Patentansprüche

1. Seitenaufprall-Airbageinrichtung für eine Fahrgastzelle eines Kraftfahrzeugs mit einem Windowbag (11) mit einem in aufgeblasenem Aktivzustand wenigstens teilweise eine Seitenscheibe (27,28) abdeckenden Fensterabschnitt (26), der sich von einer B-Säule (18) bis wenigstens zu einer C-Säule (19) und/oder von der B-Säule (18) bis wenigstens zu einer A-Säule (17) erstreckt,
und mit mindestens einem dem Fensterabschnitt (26) zugeordneten Windowbagsäulenabschnitt (29), der im aufgeblasenen Aktivzustand die zugehörige A und/oder C-Säule (17,19) zur Fahrgastzelle hin zumindest teilweise abdeckt,
wobei der Fensterabschnitt (26) sowie der vordere und/oder hintere Windowbagsäulenabschnitt (29) in eingefaltetem, nicht aufgeblasenem Einbauzustand unter einem vorne und hinten durch eine Front- bzw. Heckscheibe begrenzten, seitlichen Endabschnitt (42) der dachrahmenseitigen Innenverkleidung (Fahrzeughimmel (12)) verstaut liegen,
und wobei der Endabschnitt (42) beim Auslösen des Windowbags (11) zum Freigeben des Entfaltungsweges bewegt wird,
**dadurch gekennzeichnet,**
daß der vordere und/oder hintere Windowbagsäulenabschnitt (29) beim Entfalten in Richtung der A- bzw. C-Säule (17,19) in vertikaler und horizontaler Bewegung schräg nach vorne unten bzw. hinten unten austritt.

2. Seitenaufprall-Airbageinrichtung nach Anspruch 1,
**dadurch gekennzeichnet,**
daß der Windowbag (11) im Aktivzustand einen den vorderen und/oder hinteren Windowbagsäulenabschnitt (29) zumindest teilweise von dem Fensterabschnitt (26) abteilenden Trennabschnitt (30;53) aufweist.

3. Seitenaufprall-Airbageinrichtung nach Anspruch 2,
**dadurch gekennzeichnet,**
daß der Trennabschnitt (30) im Aktivzustand des Windowbags (11) vertikal verläuft.

4. Seitenaufprall-Airbageinrichtung nach Anspruch 2,
**dadurch gekennzeichnet,**
daß der Fensterabschnitt (26) beim Auslösen zwischen dem Fahrzeughimmel (12) und einem entlang eines Dachholms (21) angeordneten Keder (51) austritt.

5. Seitenaufprall-Airbageinrichtung nach Anspruch 2,
**dadurch gekennzeichnet,**
daß der vordere und/oder hintere Windowbagsäulenabschnitt (29) beim Auslösen zwischen dem Fahrzeughimmel (12) im Bereich der A- und/oder C-Säule (17,19) und der zugeordneten A- bzw. C-Säulenverkleidung (38,40) austritt.

6. Seitenaufprall-Airbageinrichtung nach Anspruch 2,
**dadurch gekennzeichnet,**
daß der Trennabschnitt (53) im Aktivzustand des Windowbags (11) horizontal verläuft.

7. Seitenaufprall-Airbageinrichtung nach Anspruch 6,
**dadurch gekennzeichnet,**
daß sich der horizontale Trennabschnitt (53) im Aktivzustand des vorderen und/oder hinteren Windowbagsäulenabschnitts (29) unmittelbar unterhalb eines Füllkanals (52) des Windowbags (11) befindet.

8. Seitenaufprall-Airbageinrichtung nach Anspruch 6,
**dadurch gekennzeichnet,**
daß der vordere und/oder hintere Windowbagsäulenabschnitt (29) im Einbauzustand in Richtung gegen den Fensterabschnitt (26) eingefaltet ist.

9. Seitenaufprall-Airbageinrichtung nach Anspruch 1,
**dadurch gekennzeichnet,**
daß am seitlichen Endabschnitt (42) des Fahrzeughimmels (12) eine Austrittsklappe (41) vorgesehen ist, die zum Freigeben des Entfaltungsweges um eine Schwenkachse (43) verschwenkbar ist.

10. Seitenaufprall-Airbageinrichtung nach Anspruch 1,
**dadurch gekennzeichnet,**
daß ein vorderes und hinteres Ende (31,32) des Fensterabschnitts (26) mit einer A-, B- oder C-Säulenrohbaustruktur (35-37) jeweils durch ein Spannband (32,33) verbunden ist, das beim Entfalten des Windowbags (11) zwischen der entsprechenden A-, B- oder C-Säulenverkleidung (38-40) und der A-, B- oder C-Säulenrohbaustruktur (35-37) austritt.

11. Seitenaufprall-Airbageinrichtung nach Anspruch 10,
**dadurch gekennzeichnet,**
daß sich die Spannbänder (32,33) in aufgeblasenem Aktivzustand horizontal etwa auf Höhe von Fensterbänken (13,14) erstrecken.

12. Seitenaufprall-Airbageinrichtung nach Anspruch 1,
**dadurch gekennzeichnet,**
daß der vordere und/oder hintere Windowbagsäulenabschnitt (29) und der Fensterabschnitt (26) mit einem gemeinsamen Füllkanal (52) verbunden sind, durch den ein Gas aus einem gemeinsamen Gasgenerator (52) beim Auslösen in den Windowbag (11) einströmt.

13. Seitenaufprall-Airbageinrichtung nach Anspruch 1,
**dadurch gekennzeichnet,**
daß dem vorderen und/oder hinteren Windowbagsäulenabschnitt (29) und dem Fensterabschnitt (26) jeweils separate Füllkanäle zugeordnet sind, durch die ein Gas aus einem gemeinsamen oder jeweiligen Gasgenerator (52) beim Auslösen in den entsprechenden Abschnitt (26,29) des Windowbags (11) strömt.

14. Seitenaufprall-Airbageinrichtung nach Anspruch 1,
**dadurch gekennzeichnet,**
daß die A- und/oder C-Säulenverkleidung (16,18) einteilig ausgebildet sind.
